# EUROPEAN PATENT APPLICATION

(11) **EP 2 540 609 A1**
(43) Date of publication of application: **02.01.2013**
(21) Application number: 11172374.8
(22) Date of filing: 01.07.2011
(51) Int. Cl.: B62M 9/124

(54) **Rear derailleur for bicycle**

(71) Applicant: Lin, Chang Hui, Province of China (TW)
(72) Inventor: Lin, Chang Hui, Province of China (TW)
(74) Representative: Beck & Rössig European Patent Attorneys

(57) **Abstract**

A multiple sprocket assembly includes a number of sprockets attached to a hub of a bicycle frame, and a rear chain transfer device having a carrier slidably attached to the bicycle frame and movable relative to an image plane formed by addendum of the teeth of the sprockets for engaging with a chain and for carrying and moving the chain onto the teeth of the sprockets, the rear chain transfer device includes a support attached to the bicycle frame, and a slide slidably attached to the support, and the carrier is attached to the slide for engaging with the chain and for carrying and moving the chain onto the teeth of the sprockets, an actuating device moves the slide relative to the support.

## Description

The invention relates to a multiple sprocket assembly for smoothly moving the chain onto the sprockets.

Typical multiple sprocket assemblies comprise a number of sprockets, and a front chain transfer device and a rear chain transfer device for moving the chain onto the sprockets.

However, while shifting the gear or changing the speed, the chain should be scraped with the sprockets and moved between the sprockets of different outer diameter, and the chain may not be moved to directly engage with the teeth of the sprockets without scraping or scrubbing with the sprockets.

The invention is to provide a multiple sprocket assembly including a device for moving the chain onto the sprockets and for preventing the chain from being scraped with the sprockets.
FIG. 1 is an exploded view of a multiple sprocket assembly;
FIGS. 2, 3 are partial perspective views of the assembly;
FIGS. 4, 5 are partial cross sectional views of the assembly;
FIG. 6 is another partial exploded view of the assembly;
FIG. 7 is a perspective view of the assembly as shown in FIG. 6;
FIG. 8 is a top view of the assembly as shown in FIGS. 6-7;
FIGS. 9, 10 are partial cross sectional views of the assembly;
FIG. 11 is a further partial exploded view;
FIG. 12 is a partial perspective view of the assembly as shown in FIG. 11;
FIGS. 13, 15 are plan views of the assembly as shown in FIGS. 11 and 12; and
FIG. 14 is a perspective view of the assembly as shown in FIGS. 11-13.

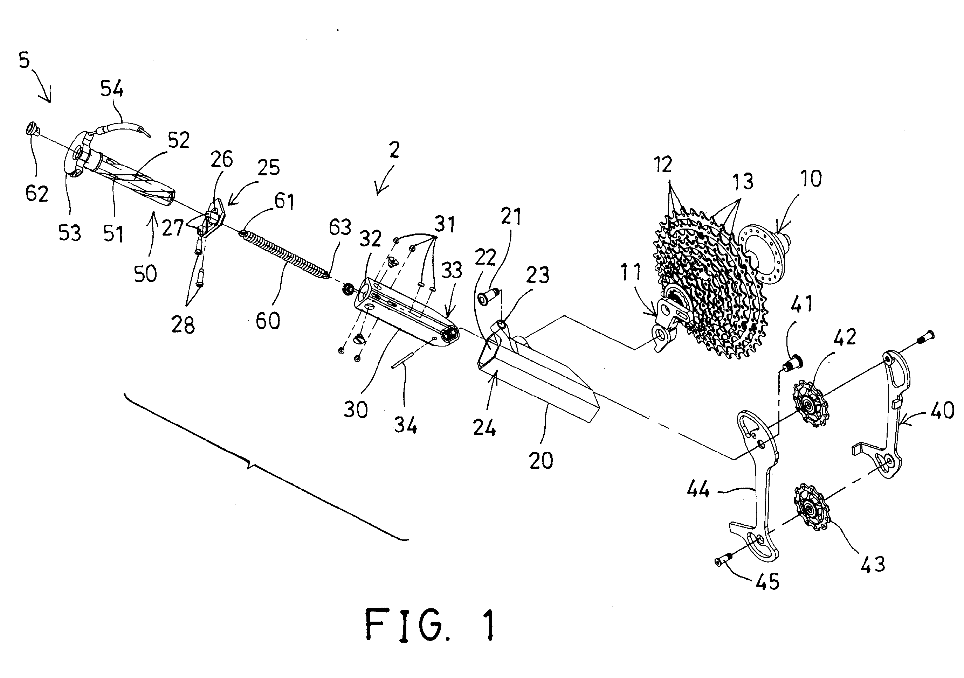

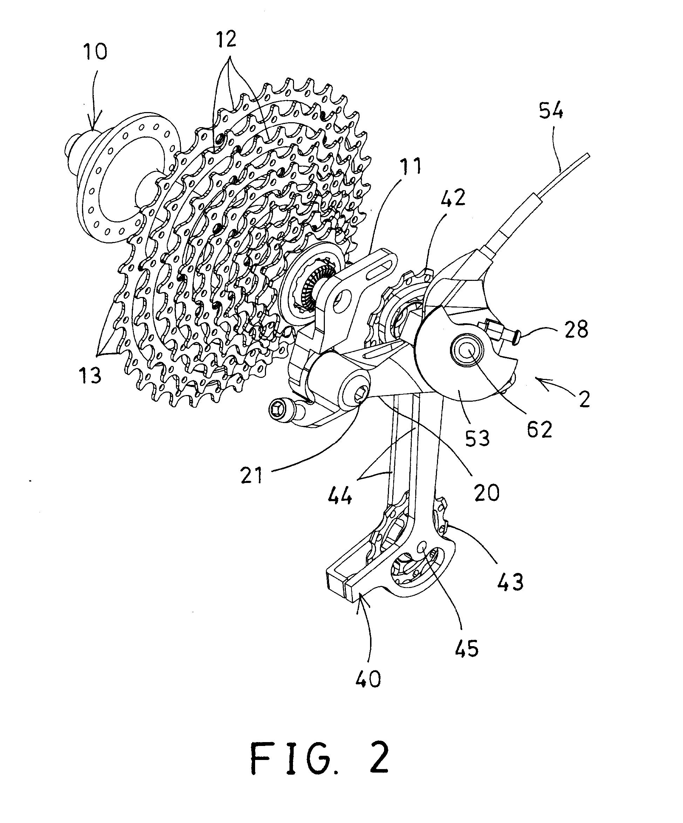

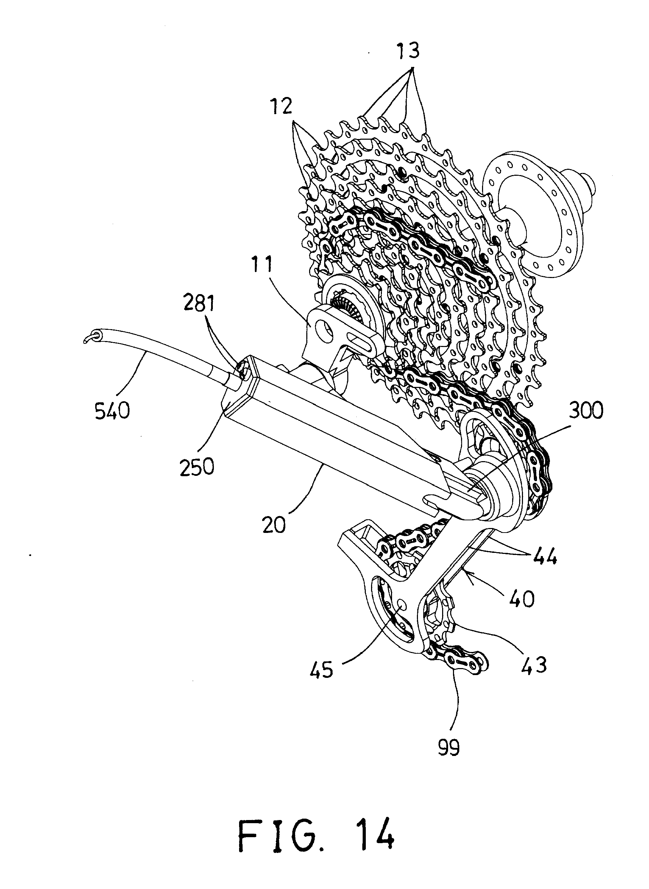

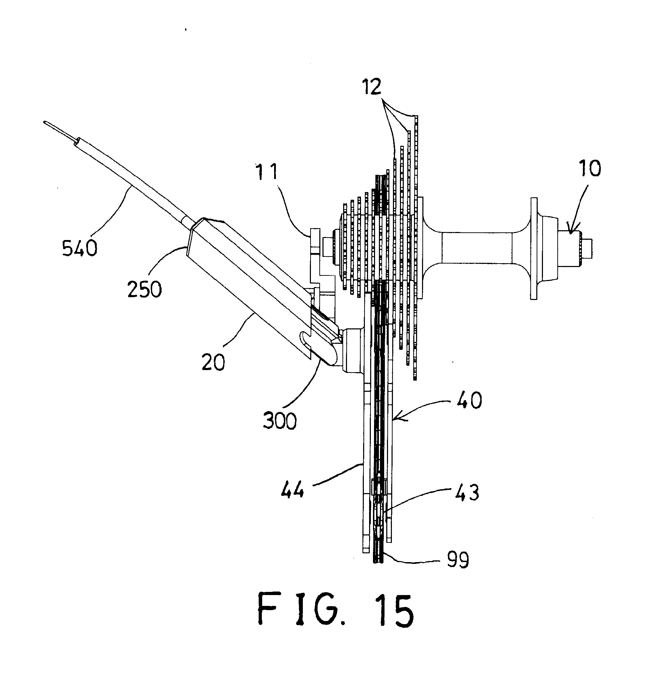

Referring to FIGS. 1-4, a multiple sprocket assembly comprises a hub 10 attached to a bicycle frame 11, a number of sprockets 12 attached to the hub 10 for engaging with a chain 99 (FIGS. 14, 15), and a front chain transfer device (not shown) and a rear chain transfer device 2 attached to the bicycle frame 11 for moving the chain 99 onto the teeth 13 of the sprockets 12.

The rear chain transfer device 2 includes a rail or housing or support 20 attached to the bicycle frame 11 with one or more fasteners 21, a chamber 22 formed in the support 20, one or more extensions 23 extended from the support 20, and includes a cover 25 attached to one end 24 of the support 20 or formed integral with the support 20, and having a bore 26 formed in the cover 25, and having one or more (such as two) ears 27 extended from the cover 25 and each for engaging with a fastener 28, the cover 25 may partially block the one end 24 of the support 20 for closing the one end 24 of the chamber 22 of the support 20.

A slide 30 is engaged in the chamber 22 of the support 20, and includes one or more bearings 31 attached between the support 20 and the slide 30, a compartment 32, and one end 33 attached to a chain carrier 40 with fasteners 41 for slidably attaching the carrier 40 to the bicycle frame 11, the bearings 31 are extended out of the slide 30 for engaging with the support 20, and may also be partially extended into the compartment 32 of the slide 30.

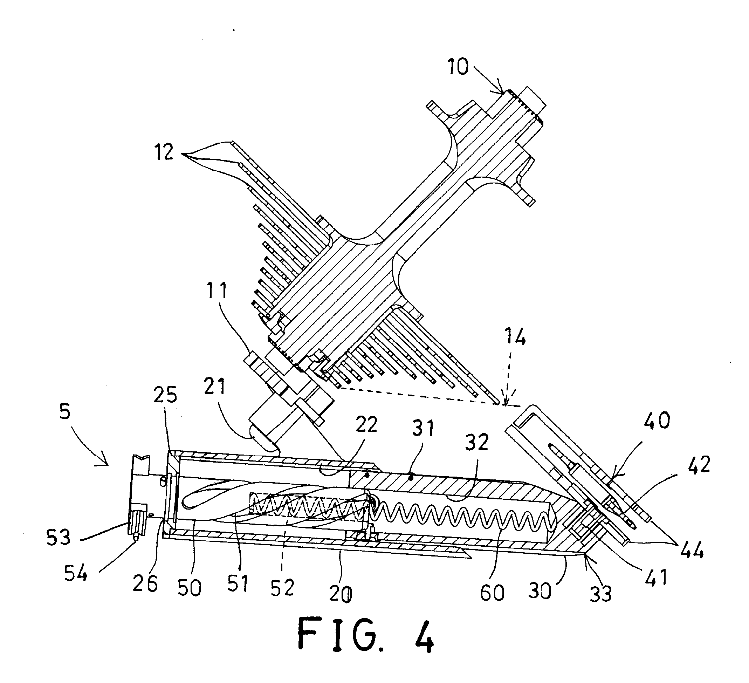

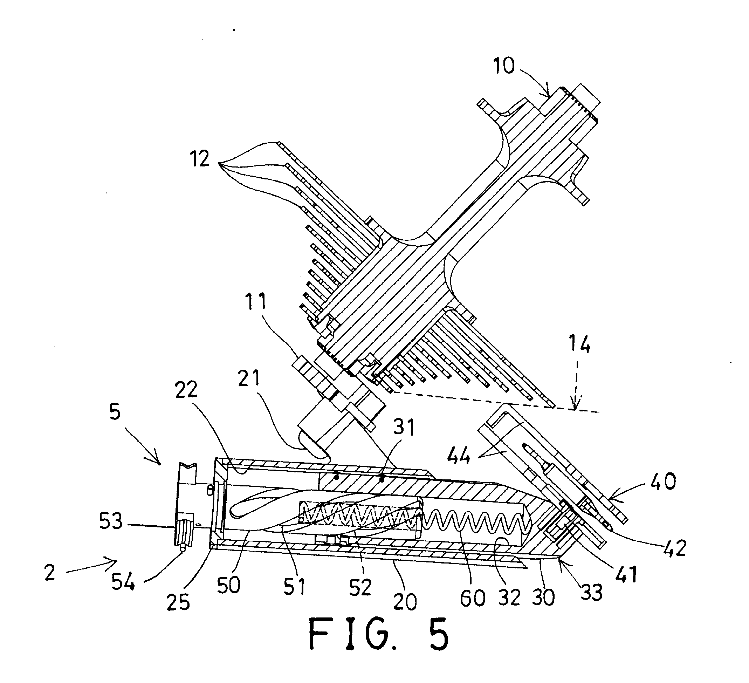

The carrier 40 includes one or more (such as two) jockey wheels 42, 43 attached between two plates 44 with fasteners 45 for carrying or moving the chain 99 onto the teeth 13 of the sprockets 12. The carrier 40 may be moved relative to the sprockets 12 (FIGS. 4, 5) by the slide 30 for moving the chain 99 onto the sprockets 12. The slide 30 and the support 20 are parallel to an image plane 14 that is formed by the addendum of the teeth 13 of the sprockets 12, and the slide 30 and the carrier 40 are moved in a direction parallel to the image plane 14.

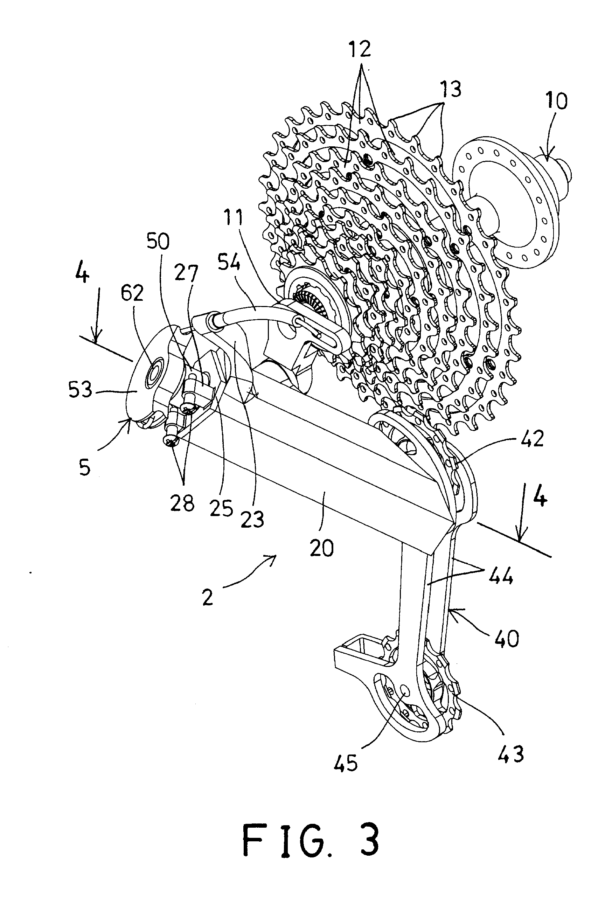

An actuating device 5 includes a rotary shaft 50 engaged through the bore 26 of the cover 25 or of the support 20 and engaged into the compartment 32 of the slide 30, and includes a helical groove 51 for engaging with the bearings 31 and for guiding the shaft 50 to rotate relative to the slide 30 and for moving the slide 30 into or out of the support 20 when the shaft 50 is rotated relative to the support 20. The shaft 50 includes a cavity 52 for engaging with a spring 60 which includes one end 61 attached to the shaft 50 with fasteners 62 (FIGS. 1, 3) and the other end 63 attached to the slide 30 with latch pins 34 (FIG. 1). The spring 60 may be a compression or an extension spring for biasing the shaft 50 relative to the slide 30.

When the slide 30 and the carrier 40 are moved out of the support 20 or moved away from the shaft 50 (FIGS. 4, 5), the spring 60 may be extended and may pull or move the slide 30 into the support 20. The shaft 50 includes a pulley 53 on one end for engaging with a cable 54 which is attached to one of the extensions 23 of the support 20 and which is coupled to a typical shift lever (not shown) and which may rotate the shaft 50 relative to the slide 30 and may move the slide 30 into or out of the support 20. The fasteners 28 may be rotated relative to the ears 27 of the cover 25 or of the support 20 for engaging with the shaft 50 and for adjusting the rotational movement of the shaft 50 relative to the support 20.

In operation, the carrier 40 may be moved relative to the sprockets 12 (FIGS. 4, 5) and parallel to the image plane 14 that is formed by the addendum of the teeth 13 of the sprockets 12, by the sliding movement of the slide 30 relative to the support 20, and with the cable 54 or the shift lever or with the moving or actuating device 5, in order to move the chain 99 onto the teeth 13 of the sprockets 12, the spring 60 may pull the slide 30 into the support 20 when the cable 54 or the shift lever is released.

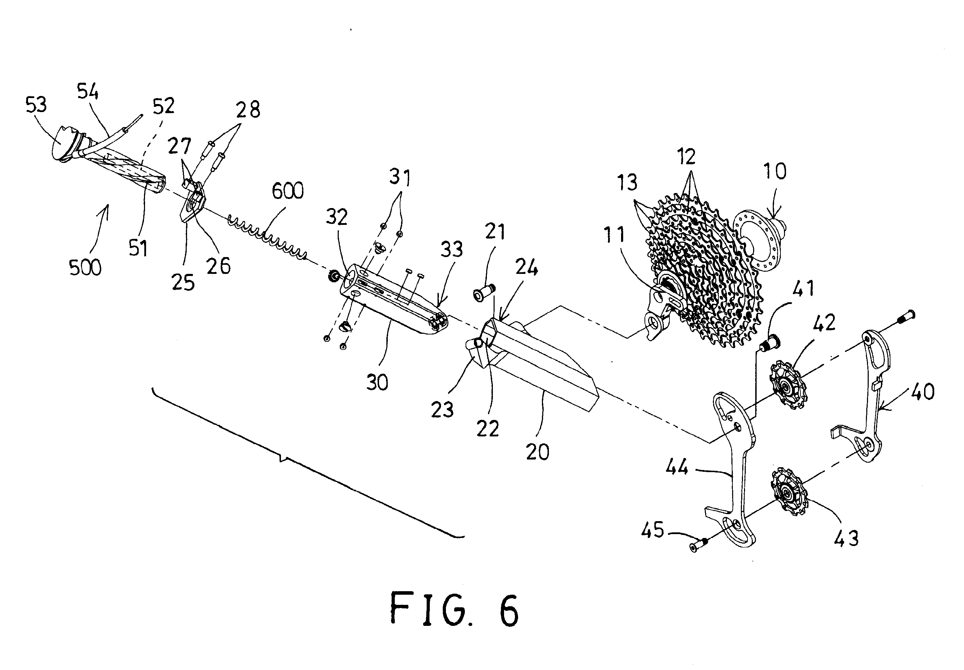

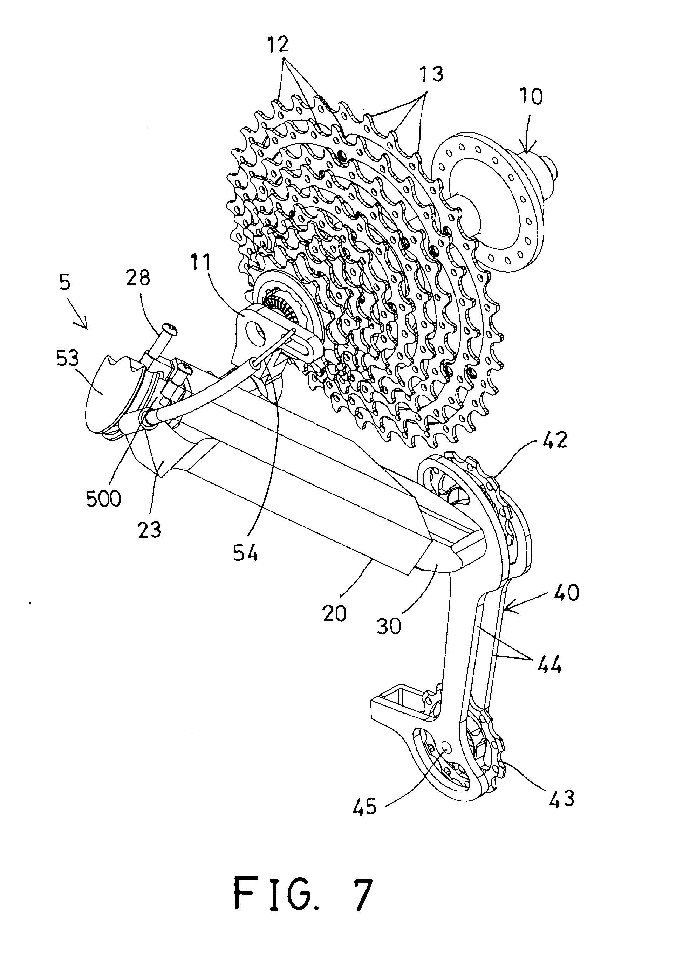

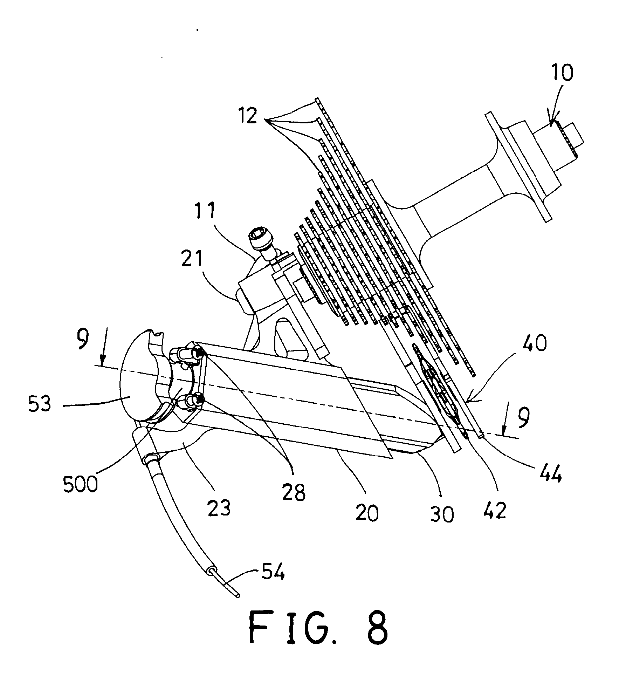

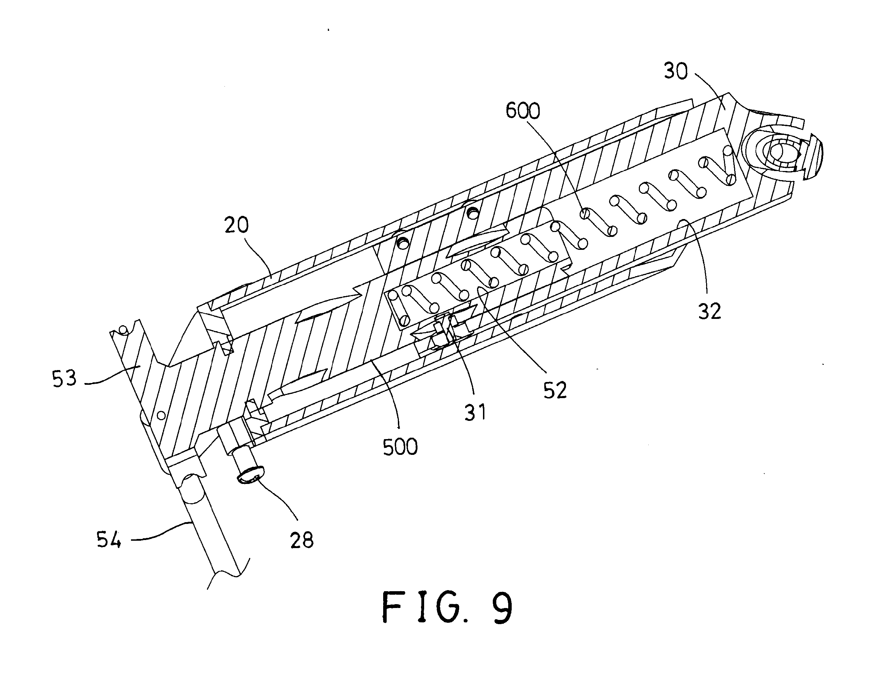

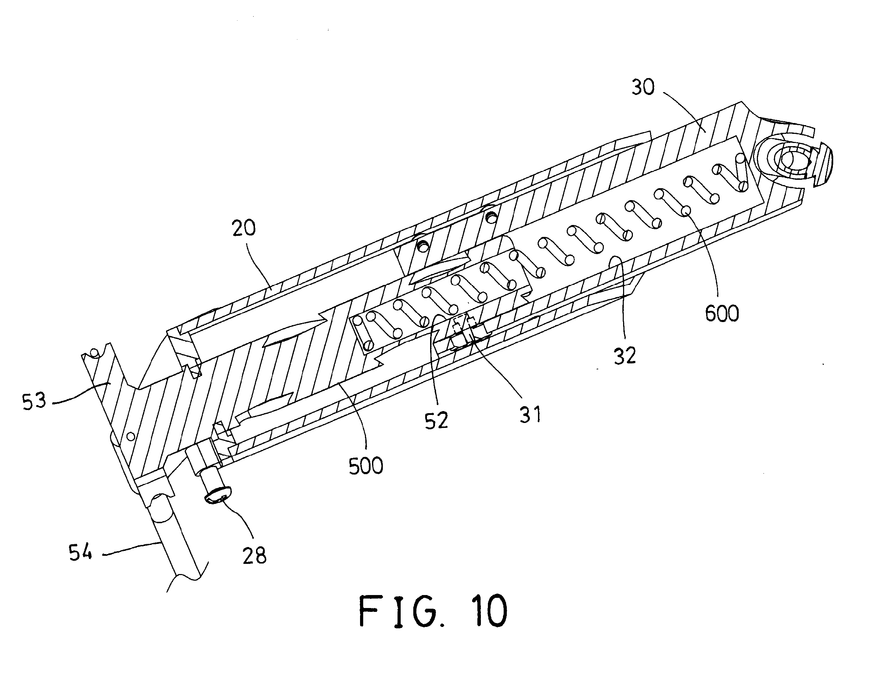

As shown in FIGS. 6-10, the spring 600 may be a compression spring to be compressed by the slide 30 when the slide 30 is moved into the support 20. The slide 30 may be moved out of the support 20 by the spring 600 (FIG. 10), and may be moved into the support 20 to compress the spring 600 (FIG. 9) by the shaft 500 when the shaft 500 is rotated relative to the support 20 by the cable 54 or the shift lever of the actuating device 5, and the spring 600 may move the slide 30 out of the support 20 when the spring 600 is released.

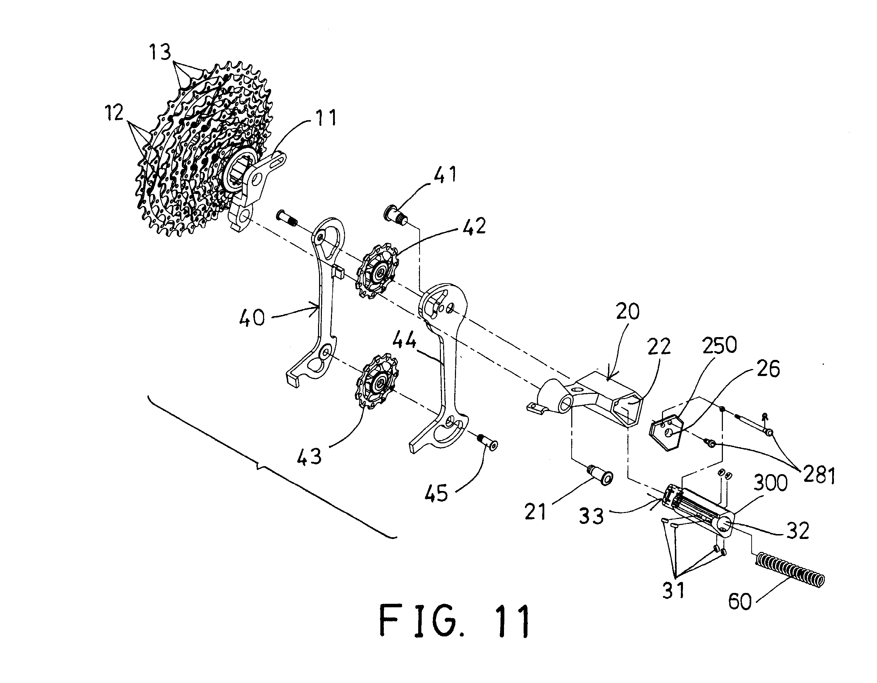

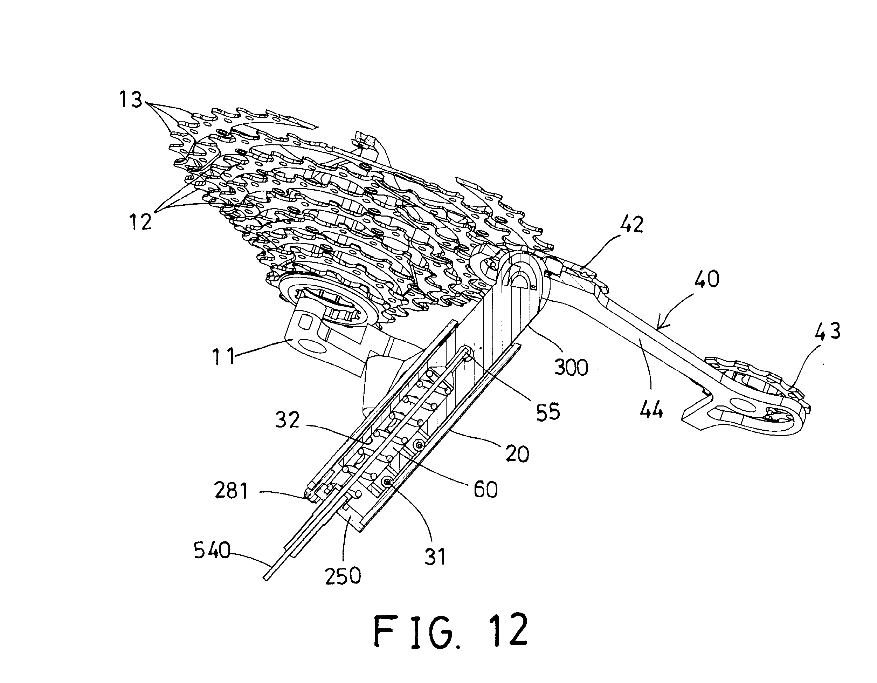

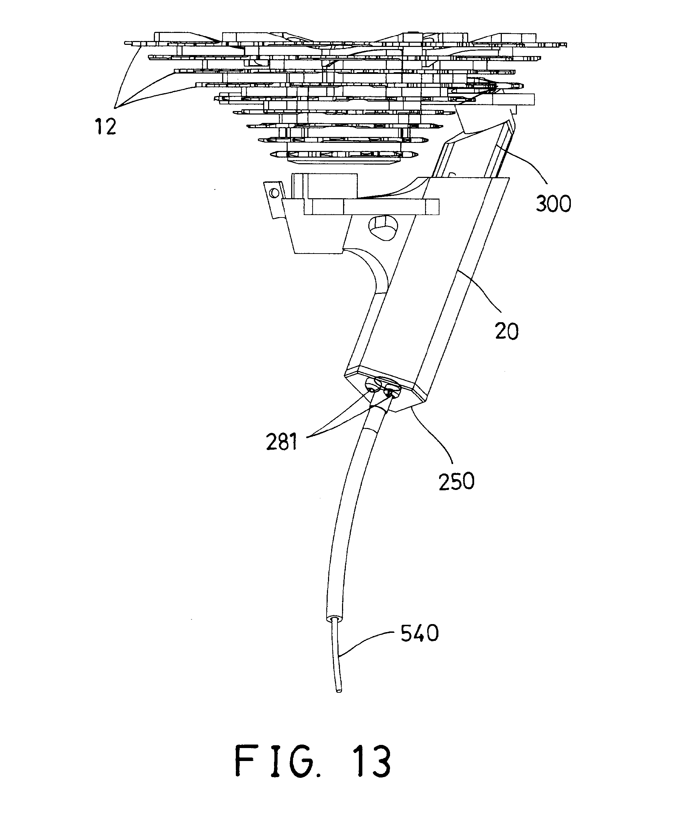

As shown in FIGS. 11-15, the cable 540 may be engaged through the bore 26 of the cover 250 and engaged into the compartment 32 of the slide 300, and includes one end 55 (FIG. 12) attached to the slide 300, and the cable 540 may move the slide 30 relative to the support 20, the fasteners 281 may be rotated relative to the cover 250 for engaging with the slide 300 and for adjusting the sliding movement of the slide 300 relative to the support 20.

## Claims

1. A multiple sprocket assembly comprising a plurality of sprockets (12) attached to a hub (10) of a bicycle frame (11), the sprockets each including a plurality of teeth, and the sprockets including an image plane formed by addendum of the teeth of the sprockets, **characterized in that**:
a rear chain transfer device (2) includes a carrier (40) attached to the frame and movable relative to the image plane formed by addendum of the teeth of the sprockets for engaging with a chain and for carrying and moving the chain onto the teeth of the sprockets.

2. A multiple sprocket assembly as claimed in claim 1, wherein the rear chain transfer device (2) includes a support (20) attached to the bicycle frame, and a slide (30) attached to the support, and the carrier is attached to the slide.

3. A multiple sprocket assembly as claimed in claim 1 or 2, wherein the support (20) includes a chamber (22) for engaging with the slide.

4. A multiple sprocket assembly as claimed in one of claims 1 to 3,
wherein the slide (30) includes at least one bearing (31) engaged with the support (20) and the slide.

5. A multiple sprocket assembly as claimed in claim 4, wherein the slide (30) includes a compartment (32), the rear chain transfer device (2) includes an actuating device (5) having a shaft (50) attached to the support (20) and engaged into the compartment of the slide, and the shaft includes a helical groove (51) for engaging with the bearing (31).

6. A multiple sprocket assembly as claimed in claim 5, wherein the shaft (50) includes a pulley (53) for engaging with a cable (54).

7. A multiple sprocket assembly as claimed in claim 5 or 6, wherein the shaft (50) includes a cavity (52) for receiving a spring (60) which is secured between the shaft and the slide.

8. A multiple sprocket assembly as claimed in one of claims 5 to 7,
wherein the support (20) includes a cover, and the shaft (50) is attached to the cover.

9. A multiple sprocket assembly as claimed in one of claim 2 to 8,
wherein a cable is coupled to the slide.

10. A multiple sprocket assembly as claimed in one of claims 1 to 9,
wherein the carrier (40) includes at least one plate (44), and a pair of jockey wheels (42, 43) attached to the plate.
